# EUROPEAN PATENT APPLICATION

(11) **EP 0 958 859 A1**
(43) Date of publication of application: **24.11.1999**
(21) Application number: 99201325.0
(22) Date of filing: 28.04.1999
(51) Int. Cl.: B01J 19/08, B01D 53/32

(54) **Plasma reactor**

(30) Priority: 18.05.1998 US 80156
(71) Applicant: Delphi Technologies, Inc., Troy, MI 48007 (US)
(72) Inventor: Nelson, Charles Scott, Clio, Michigan 48420 (US); Goulette, David A., Marine City, Michigan 48039 (US)
(74) Representative: Denton, Michael John

(57) **Abstract**

A plasma reactor comprising: a housing defining a through gas flow path enclosed by walls (24); a first electrode (30) disposed in the housing, extending radially across the flow path and allowing gas flow therethrough; a second electrode (32) disposed in the housing, extending radially across the flow path and allowing gas flow therethrough, the second electrode (32) being spaced downstream in the gas flow path from the first electrode (30); and a reaction chamber (13) defined in the housing between the first and second electrodes, the reaction chamber being filled with at least one non-conductive foam cylinder (34,36,38,40,42,62) causing an irregular tortuous flow of gas through the reaction chamber.

## Description

This invention relates to a plasma reactor.

### BACKGROUND OF THE INVENTION

Plasma reactors have been used, in laboratories, to treat internal combustion engine exhaust gases. Studies show that the plasma created in the reactor aids in the reduction of lean NOx constituents of the exhaust gases.

There are several types of plasma reactors. In one type, plasma is created between two high voltage electrodes over a vacant air gap through which exhaust gases flow. This vacant air gap presents challenges because it requires a high voltage to create the plasma and it is difficult to prevent the formation of arcs between the electrodes.

In another type of plasma reactor, ceramic or glass pellets, beads or fibers are packed between the two high voltage electrodes. The ceramic or glass help create the desired type of plasma field at a lower voltage than would otherwise be necessary if only an air gap separated the two electrodes. The ceramic or glass can also help prevent direct arcing between the two high voltage electrodes. But these materials also have drawbacks. For example, they create a high restriction in the flow passage.

### SUMMARY OF THE INVENTION

It is an objective of this invention to provide a plasma reactor according to claim 1.

Advantageously, this invention provides a plasma reactor useful for treating exhaust gases of internal combustion engine.

Advantageously, this invention provides a plasma reactor capable of providing a high-quality plasma between two electrodes for treatment of exhaust gases to remove undesirable NOx gas species.

Advantageously, this invention provides the plasma reactor with a new type of packing material that allows the advantages provided by ceramic pellets without the drawback of restricted flow.

Advantageously, this invention makes use of the new packing material to provide disordered flow passage between the two electrodes. These disordered flow passages are separated by thin walls of irregular shape that in many places end in points. The disorder flow passages and thin walls create a tortuous path for the gas to flow through ensuring effective contact between the gases and the plasma. And the thin walls with many points provides excellent surfaces for the creation of plasma between the two electrodes while minimizing the chances of direct arcing between the two electrodes.

Advantageously then, according to a preferred example, this invention provides a plasma reactor comprising a tube internally enclosing a gas flow path in which are disposed a pair of first and second electrodes spaced apart in the flow of exhaust gas; and a material substantially filling the space between the first and second electrodes, wherein the material comprises a non-conductive foam, wherein the material is porous and provides a tortuous path between the first and second electrodes for gas flow and also provides surfaces for creation of the plasma between the electrodes while preventing arcing between the two electrodes.

### BRIEF DESCRIPTION OF THE DRAWINGS

The present invention will now be described by way of example with reference to the following figures, in which:
Figure 1 illustrates an example plasma reactor according to this invention;
Figure 2 illustrates another example plasma reactor according to this invention.

### DETAILED DESCRIPTION OF THE INVENTION

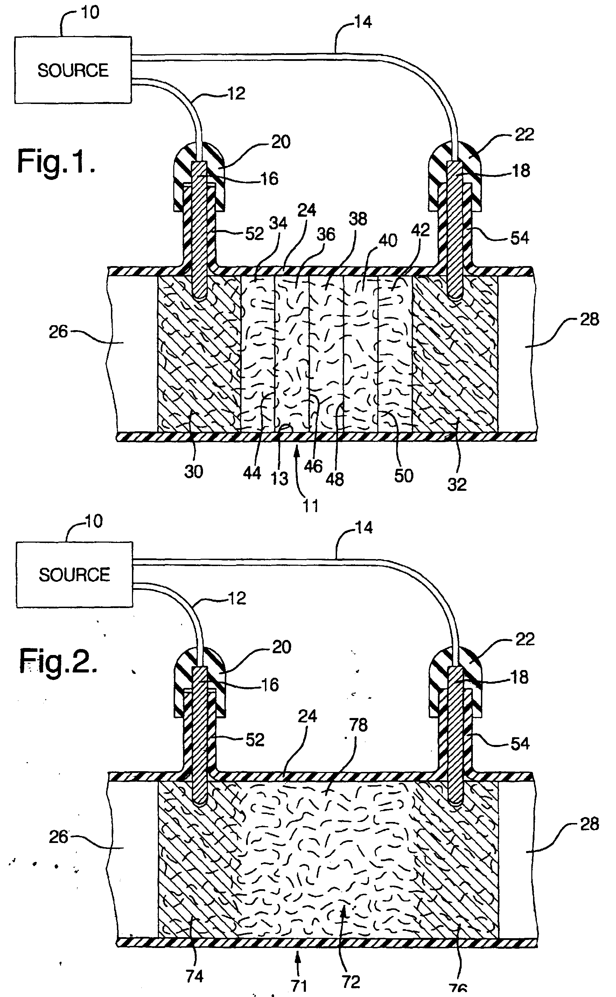

Referring now to figure 1, example plasma reactor 11 includes a ceramic flow tube 24 having an inlet end 26 and an outlet end 28. Within The ceramic flow tube 24 are two electrodes 30 and 32 spaced axially apart. Each electrode spans crosswise or radially the entire inner passage 13. Electrodes 30 and 32 may be any suitable type for creating an electric potential across the chamber between the electrodes along the whole flow passage therebetween while also allowing gas flow therethrough. For example, electrodes 30 and 32 may be conductive mesh or screen. In a preferred example, electrodes 30 and 32 comprise a metallic foam material such as described in co-pending patent application, United States Serial No. 09/027,780, assigned to the assignee of this invention. If the metal foam electrodes are utilized, they may be coated with a catalytic wash coat of a known type as described in the above mentioned co-pending patent application.

Two tubular protrusions 52, 54 extend from the side of the tube 24, each allowing passage of a connector 16, 18 through the wall of the tube 24 and into electrical contact with an electrode 30, 32. Electrical wires 12 and 14 couple connectors 16 and 18 to a controllable source of electric power 10 of a known type for energizing a plasma reactor. Seals 20 and 22 have a central passage for wires 12 and 14 and provide a seal between the wires 12 and 14 and the tubular extensions 52, 54 so that exhaust gas cannot escape from plasma reactor 11. References 34, 36, 38, 40, and 42 denote layers of ceramic foam material cut into circular cylindrically shaped pieces to fit snugly within the flow passage 13 between electrodes 30 and 32. For high efficiency in creating the plasma and in stimulating interaction of the gas flow with the plasma, the ceramic foam preferably has an average cell or opening size of three millimeters or less. By placing the several pieces of foam adjacent to each other, several interfaces 44, 46, 48 and 50 are created between the adjacent foam layers. These interfaces 44, 46, 48, and 50 are characterized by sharp points were ends of the separate ceramic foam material pieces 34, 36, 38, 40 and 42 face each other, creating perfect points for stimulating the creation of plasma.

The ceramic foam creates a very porous packing material with irregular flow passages between the two electrodes 30 and 32. The irregular flow passages are tortuous to the extent that they help prevent arcing from occurring between the two electrodes 30 and 32. The walls of the foam are much thinner than the walls of ceramic pellets, thus allowing the foam to be more porous, and less restrictive on gas flow than are packed pellets.

In operation, vehicle exhaust gases pass through the plasma reactor from the upstream end 26 of the tube 24 to the downstream end 28. The gases first pass through the electrode 30 into the reaction chamber defined as the space between electrodes 30 and 32. In the reaction chamber, a plasma or ion field is generated by the high voltage applied between the first and second electrodes 30 and 32. This plasma operates to promote the reduction of NOx as well as oxidation of HC and CO emissions constituents present in the exhaust gases.

Referring now to figure 2, the example plasma reactor 71 shown is similar to that shown in figure 1 and having identical components thereto except as identified below. The electrodes 30 and 32 and the ceramic foam layers 34, 36, 38, 40 and 42 are removed and replaced by a single foam structure 72. The foam structure 72 has a first end 74, a second end 76 and a body portion 78 between the ends 74, 76. Together the first end 74, second end 76 and body portion 78 form a tubular ceramic foam piece. The first and second ends 74 and 76 are coated with metal so that they form conductive metal foam ends electrically connected to the terminals 16 and 18 to comprise the electrodes for the plasma reactor 71. The metal coatings on the ends 74 and 76 may be achieved by chemical deposition or any other method for forming metal foams or for metalizing a ceramic substrate known to those skilled in the art. Additionally, the ends 74 and 76 may be coated with a catalyst for stimulating conventional oxidation of hydrocarbons in a manner known to those skilled in the art. In this example the internal components of the plasma reactor are provided by a single ceramic foam piece 72 coated with metal at the ends 74 and 76. The body portion 78 provides the packing material for the reactor, encouraging the formation of plasma when the electrodes are energized and also encouraging interaction between the gas and the plasma.

The examples described above with reference to figures 1 and 2 include two electrodes spaced axially apart. In another example, the electrodes are spaced laterally across the flow path, symmetrical with respect to a plane including the central flow axis of the reactor. In this example, the exhaust gases need not pass through the electrodes.

In yet another example, three or more electrodes may be placed in the flow path of the reactor with each set of two adjacent electrodes creating an electric field for forming plasma. This configuration may help reduce the voltage between any two adjacent electrodes necessary to form the plasma.

An advantage of the ceramic foam material is that it can be provided in any shape necessary to match the flow path. Example alternative shapes include those to match the inside dimensions of a tube with a bend or arc in it and those where the tube diameter changes over the length of the reactor. In one such example, the reactor housing has an hour glass shape, with the ends of the reactor where the electrodes are located having a larger diameter than the central body portion of the reactor, which has a reduced diameter.

In another example, a metal tube can be used as the housing if the electrodes are spaced inward from the tube wall and the exciting voltage is not too high to cause arcing. Additionally, the ceramic foam may be covered with a pollutant-reducing material, such as barium titinate or other similar functioning material.

## Claims

1. A plasma reactor (11,71) comprising:
a housing defining a through gas flow path enclosed by walls (24);
a first electrode (30,74) disposed in the housing, extending radially across the flow path and allowing gas flow therethrough;
a second electrode (32,76) disposed in the housing, extending radially across the flow path and allowing gas flow therethrough, the second electrode being spaced downstream in the gas flow path from the first electrode; and
a reaction chamber (13) defined in the housing between the first and second electrodes, the reaction chamber being filled with at least a first non-conductive foam cylinder (34,36,38,40,42,72) causing an irregular tortuous flow of gas through the reaction chamber.

2. A plasma reactor according to claim 1, wherein the non-conductive foam cylinder (72) has first and second ends (74,76) and a body portion (78) between the first and second ends, wherein the first and second ends (74,76) are each coated with a conductive metal material, wherein the body portion (78) is not conductive, wherein the first and second ends (74,76) coated with conductive metal material comprise the first and second electrodes and the body portion comprises the packing material for the plasma reactor.

3. A plasma reactor according to claim 1, also comprising a second non-conductive foam cylinder (34,36,38,40,42) within the reaction chamber adjacent to the first non-conductive foam cylinder (34,36,38,40,42).

4. A plasma reactor comprising:
a tube (24) internally enclosing a gas flow path;
a pair of first and second electrodes (30,32; 74,76) spaced apart in the flow of exhaust gas within the tube; and
a material (34,36,38,40,42,78) substantially filling the space between the first and second electrodes, wherein the material comprises a non-conductive foam, wherein the material is porous and provides a tortuous path between the first and second electrodes for gas flow and also provides surfaces for creation of the plasma between the first and second electrodes while preventing arcing between the first and second electrodes.
